# EUROPEAN PATENT SPECIFICATION

(11) **EP 2 793 550 B1**
(45) Date of publication and mention of the grant of the patent: **25.10.2017**
(21) Application number: 12759751.6
(22) Date of filing: 20.09.2012
(51) Int. Cl.: A01G 3/025

(54) **LOPPER DEVICE**
BAUMSCHNEIDEVORRICHTUNG
DISPOSITIF D'ÉBRANCHEUR

(30) Priority: 20.12.2011 WO PCT/EP2011/073389
(43) Date of publication of application: 29.10.2014
(73) Proprietor: HUSQVARNA AB, 561 82 Huskvarna (SE)
(72) Inventor: KOHL, Peter, 89257 Illertissen (DE)
(74) Representative: Finkele, Rolf
(86) International application number: PCT/EP2012/068499
(87) International publication number: WO 2013/091918

(56) References cited:
- DE-C- 615 201
- FR-A- 715 557
- FR-A- 1 342 882
- GB-A- 326 658
- US-A- 2 235 564

## Description

The invention is related to lopper device.

Loppers, in particular tree loppers, generally comprise a lopper head, comprising cutting blades for cutting branches, twigs and the like. The lopper head in general is attached to an end of an elongated stick or handle, and operable via mechanic elements from a remote end of the stick.

One major issue with such lopper devices is to provide good and easy remote operability of the lopper head. In particular it is of interest to provide lopper devices having cutting blade arrangements that can easily be positioned at or on branches and other items to be lopped. Many different approaches directed to simplify remote operation of the lopper heads have already been suggested. In this connection, reference is in particular made to US 6,526,644 B2 and EP 0 754 404 B1, GB-A-326658. Despite all proposed lopper devices, there is still need for enhancing operability, in particular remote operability, of lopper devices.

Therefore, it is an object of the invention to provide a lopper device allowing easy and alleviated remote operation and easy mechanical handling. In particular, a lopper device shall be provided where cutting blades can easily be positioned at or on branches and other items to be lopped.

This object is solved in particular by claim 1. Preferred embodiments result from dependent claims.

According to claim 1a lopper device is provided comprising a lopper head having two cutting blades which are rotatable relative to each other and in the opened state define a cutting gap in-between. A relative rotational movement in particular can be obtained if one of the blades is a moving blade and the other one of the blades, i. e. a counter blade, is a fixed, stationary blade. In rotating the moving blade towards the fixed blade where a cutting gap between the cutting blades is closed, a cutting action can be obtained between respective cutting edges or faces of the cutting blades. Alternatively a relative rotational movement of the blades can also be obtained if both the blades rotate against each other when closing the cutting gap between the cutting blades.

The cutting blades of the lopper head, i. e. a type of cutting head, are designed for cutting branches and limbs of trees and bushes and the like. The cutting blades preferably are implemented as scissor-type cutting blades, which in particular shall mean that the cutting blades may be fixed to each other by a hinge pin such that the blades are rotatable relative to each other. A relative rotational movement in particular can be obtained if one of the blades is a moving blade and the other one of the blades, i. e. a counter blade, is a fixed, stationary blade. In rotating the moving blade towards the fixed blade, the cutting gap between the cutting blades is closed and a cutting action is performed between respective cutting edges or faces of the cutting blades.

The lopper device further comprises a guidance unit. The guidance unit is adapted to guide, lead or direct items to be lopped by the lopper device into and towards the cutting gap. The guidance unit comprises at least one wedged guidance element which is designed and adapted such that it increases in height in a direction towards the cutting gap. The term "increasing in height" in particular shall mean that the wedge height increases over its length from a fixed start value to a fixed end value or end height. A guidance edge of the guidance element between the start value and end value preferably is linear, but may be of any other geometry.

The guidance element as proposed beforehand can help branches and other items intended to be lopped to enter the cutting gap of the lopper head. In particular, the guidance elements can help to move the cutting gap onto a branch and the like, in particular in pushing or pulling movements of the lopper device performed by a user. The wedged structures in particular may contribute to overcome or bridge edges or gaps otherwise appearing between cutting blades and other elements of the lopper device.

The at least one guidance element may be provided as a separate substitutable part. This may be of advantage for replacing respective guidance units by spare parts, for example. However, it may also be that the guidance element is implemented in a one-piece monolithic configuration with a corresponding element of the lopper device.

In an embodiment, a center plane of the at least one guidance element in at least one positional, i. e. pivotational, configuration of the lopper head coincides and/or is parallel to at least one of an axial plane of symmetry of the lopper device and a cutting plane defined by the cutting blades. In other words, the guidance element may be oriented parallel or share a common plane with the cutting plane. The term cutting plane shall mean the plane in which a cutting plane of the cutting blades, in more detail of the cutting edges of the cutting blades, lies. The plane of symmetry of the lopper device may comprise a center line of a lopper stick to which the lopper head is attached to. With orientations of the at least one guidance element as mentioned beforehand, guiding edges of respective guidance elements can be adapted to directly, in particularly linearly, lead or guide to the entrance area or face of the cutting gap. In particular, comparatively large gaps and/or edges along guiding edges can be avoided, at least be reduced.

A lopper stick in particular shall mean a rod or handle having sufficient stiffness and bending resistance to operate a lopper head attached to a remote end of the lopper stick. The lopper stick may have several meters in length. The cross section of the lopper stick may be of circular, oval, polygonal, in particular rectangular, rounded polygonal or other geometry. Preferably, the lopper stick is a telescopic or multiple telescopic stick.

According to a further embodiment, one of the at least one guidance elements is implemented as wedged extension axially protruding from at least one of the cutting blades. Such an extension, i. e. wedged protrusion, may be used as a catcher or hook for catching branches, twigs or items to be lopped. Once caught by the catcher, i. e protrusion, the cutting gap may be pushed or pulled onto the branch, wherein the branch slides along a guiding edge of the guidance element (s). After adequately inserting the branch into the cutting gap, the branch and the like can be lopped in a corresponding lopping action of a user. Preferably, the wedged extension is implemented to be parallel and in line with the respective cutting blade and/or cutting plane defined by the cutting blades.

In particular in cases where the at least one guidance element constitutes an element protruding from one of the cutting blades, in particular a fixed blade, it is preferred that the wedged extension guidance element is implemented in a one piece monolithic configuration with the respective cutting blade. This may be advantageous for mechanical strength and stability of the guidance element.

In a further preferred embodiment, the lopper device comprises a fixed blade and a moving blade. Preferably, the wedged extension is part of or implemented at the fixed blade. Providing the wedged extension at the fixed blade advantageously and in general will not impair movability of the moving blade. Further, it will be possible to design the moving blade comparatively short in length. Short moving blades may be advantageous for generating comparatively high cutting forces and cutting torsional moments.

In a further embodiment, one of the at least one guidance elements is implemented as a wedged fin, blade or lamellae attached to the lopper stick. The lopper stick in this configuration is adapted to be mounted to and carrying the lopper head.

The wedged fin guidance element attached to the lopper stick may help to guide branches and the like from a lopper stick position into the cutting gap. Here, in particular when the cutting gap is oriented towards a user, a pulling movement of the operator will be adequate to move the cutting gap onto the item to be lopped.

A user of the lopper device can put the lopper stick onto a branch, and, by pulling the lopper stick in a direction towards the user, the branch will slide along the lopper sick, and will be guided via the wedged guidance element into the cutting gap where it can finally be lopped. In all, guidance elements provided with the lopper stick and proposed herein may greatly enhance operability of the lopper device.

In a further embodiment, a wedge height of the wedged fin essentially corresponds to a wedge height of the wedged extension. This is of particular advantage if a base line of the wedged fin essentially coincides or is parallel and essentially is in line with a base line of the wedged extension. In particular, due to the corresponding wedge heights, gaps, edges and similar traps between different guidance elements, in particular in transitional areas, can be prevented. This in turn facilitates entrance and insertion of branches and the like into the cutting gap. Note, that the wedge height in particular shall mean the maximum or an upper wedge height of a corresponding guidance element.

In a preferred embodiment, the wedged fin guidance element, in particular intended to be fixed or attached to the lopper stick, comprises a sleeve adapted and designed to be fixed, engage around and/or wrap around the lopper stick. Such a sleeve allows the wedged fin guidance element to be attached to the lopper stick, in particular in a removable manner. In attaching the guidance element via a sleeve, the guidance element may easily be removed and installed, in particular as a retrofit part. In addition, damaged or worn out guidance elements can easily be exchanged. It is of further advantage if the fixture of the wedge fin guidance element is configured in a manner that one can slide the wedge fin along the lopper stick and thus can place it in respect to the cutting blades at an optimum position for best guidance of the branches to be lopped.

An inner diameter of the sleeve preferably matches an outer diameter of the lopper stick, at least in a section in which the guidance element shall be installed. The inner and outer diameter may for example be at least one of round, oval, polygonal, rectangular, rounded polygonal, rounded rectangular and the like.

It shall be noted, that the wedged fin guidance element, in particular the sleeve, may in one configuration be adapted to be snap connected to the lopper stick. In this case, the guidance element, in particular the sleeve, may comprise snap elements, establishing a u- or c-shaped geometry, for example. The snap elements may be adapted to at least partially wrap around the lopper stick when connected thereto.

In a further embodiment, the lopper head comprises a cranked pivot bearing. The pivot bearing is preferably cranked vis-à-vis the lopper stick carrying the cutting head.

The pivot bearing is adapted to pivotably carry the cutting blades. The pivot bearing and cutting blades are implemented such that the cutting blades can be oriented parallel and at least essentially antiparallel, in particular antiparallel, to a lopper stick carrying the lopper head.

Antiparallel movement, position or orientation shall in particular mean that the cutting head is oriented towards the lopping stick, in particular an operator or user of the lopping device. The antiparallel and parallel configuration may be obtained by a respective rotating or pivoting movement of the lopper head over an angle of 180 degrees.

In antiparallel configuration, the cutting blades, in particular the fixed blade, are/is positioned at the lopper stick. The cutting gap in this configuration preferably is oriented or opens in a direction towards an end of the lopper stick remote from the end to which the lopper head is mounted to. During user operation, the cutting gap in this case opens toward the user operating the lopper device the remote end of the lopper stick.

In the parallel configuration, the cutting gap is oriented away from the lopper stick or a user operating the lopper device. Such an orientation is offset from the antiparallel configuration by about 180 degrees. Putting a branch into the cutting gap in the parallel orientation generally requires a pushing movement, i. e. a movement directed away from the user. Here, the wedged extension may be used to set or put the cutting head on a branch, and the guidance element may assist in moving in a pushing action the cutting gap onto a branch and the like.

In the antiparallel configuration, a back face or abutment face of the wedged extension faces or even abuts the lopper stick. Here, the wedged extension preferably constitutes a protruding section of the fixed cutting blade. The term back face of the wedged extension shall mean a side of the cutting blade averted from a cutting edge side of the cutting blade.

In particular with the configuration as set out beforehand a gap between the wedged extension and the lopper stick in the antiparallel configuration can be kept as small as possible. This has the advantage that hardly any branch or twig can enter and be caught or clamped between the wedged extension and lopper stick.

In a further embodiment, the pivot bearing may comprise a first bearing element attached to the lopper stick or a connector section for attaching the lopper stick to the lopper head. The pivot bearing may comprise a second bearing element pivotably attached to the fist bearing element and carrying cutting blades. The cutting blades preferably are attached to the second bearing element, where in particular screws, rivets, hot-caulking and others may be used for attachment.

The bearing elements of the pivot bearing may be implemented as interlocked and interlaced swivel connectors. Mating bearing elements of the pivot bearing in particular may be designed as interlaced cylinders. With interlaced cylinders, an inner cylinder may have a special outer contour adapted and customized to fit a corresponding inner contour of an outer cylinder wrapping the inner cylinder.

The pivot bearing preferably is cranked against, i. e. vis-à-vis, a center line of the lopper stick and/or connector section. This in particular shall mean that a pivoting plane of the pivot bearing, i. e. a plane defined by pivoting movement and being arranged between the first and second bearing elements, is slanted with respect to the center line of the lopper stick and/or connector section. The pivoting plane, in particular the pivoting level, may be offset or spaced from an endpoint or end-section of the lopper stick or connector section.

Providing a cranked pivot bearing greatly enhances operability of the lopper head. In particular, advantageous operational positions and orientations of the lopper head and cutting blades relative to the lopper stick can be obtained.

The pivot axis of the pivot bearing preferably is oriented parallel to a cutting plane of the cutting blades. Further, the pivot axis preferably lies within the cutting plane or may be offset therefrom.

Note that the term cutting plane in particular shall mean a plane defined by cutting motions, in particular rotating cutting motions of the moving cutting blade. In particular if the cutting blades are implemented in a scissor type arrangement, the cutting plane may be spanned and defined by respective cutting edges of the cutting blades in the opened configuration.

In an embodiment of the lopper device, the pivot bearing and arrangement of cutting blades is such that the cutting blades generally can be rotated in a full circle revolution without a cutting blade striking the lopper stick. Such an arrangement in general provides enhanced operability and utilizability of the lopper device.

In a further embodiment relating to the antiparallel configuration, one of the blades, preferably the fixed blade, in particular the wedged extension, laterally abuts against and overlaps the wedged fin guidance element attached to the lopper stick.

Here, the wedged fin guidance element on the one hand acts as a pivoting stop for the cutting blades. As a pivoting stop, pivoting movement of the cutting blades may be restricted to about 360 degrees, easing operation of the lopper device.
On the other hand, the wedged fin together with the wedged extension in antiparallel configuration may make up a unique wedged guiding edge, preferably of linear type.

The unique wedged guiding edge preferably starts from the lopper stick, in particular from a position close to the outer surface of the lopper stick, and ends at the opening or mouth of the cutting gap, i. e. at the end of the unique wedged extension at the cutting blade. Via the common guiding edge, it is possible to set the lopper stick on a branch or item to be lopped and put the cutting gap onto the branch in a pulling motion, i. e. a motion moving the lopper stick towards the user. In the pulling motion, first the lopper stick and then the unique guiding edge will slide along the branch to finally put the cutting gap onto the branch.

The unique guiding edge, in particular the wedged fin guidance element, is advantageous in bridging edges, steps or gaps otherwise existing between cutting blade and lopper stick. If not bridged, the edges, steps or gaps existing between cutting blade and lopper stick may block, hinder or complicate the action of pushing or pulling the cutting gap onto a branch or other item to be lopped.

In connection with the invention it shall be mentioned that the cutting blades may be scissor type cutting blades and a center line or axis of the cutting gap between the cutting blades in the open configuration may slanted vis-à-vis a pivoting plane of the pivot bearing. One of the scissor type cutting blades, in more detail the moving blade, may be fixed by a hinge pin to the other cutting blade, i. e. the fixed cutting blade. Note that he term "cutting gap" in particular shall mean a cutting throat established between both cutting blades in the opened configuration.

Providing the cutting blades in such a way that the cutting gap is slanted vis-à-vis the pivoting plane, in particular together with the cranked arrangement of the pivot bearing, may result in advantageous handling properties of the lopper head in particular lopper device. In addition, the lopper head may be designed in a well-arranged manner supporting visibility of the cutting zone and cutting gap even from remote locations. In particular with well arranged cutting zones, branches, twins and similar may easily be introduced into the cutting gap even from remote positions.

It shall further be mentioned that the wedged fin guidance element may be designed such that it projects in a radial direction from lopper stick to which it is attached or fixed to. The wedged fin guidance element may be made from a plastic material, from metal or any other suitable material. The wedged fin guidance element may for example have a length of about 115 mm, an overall height of about 20 mm and an inclination of a guiding edge of the wedged fin guidance element may be approximately 15°. The wedged fin guidance element may further have a thickness of about 3 mm or could be approximately about the thickness of the cutting blades. In case the guiding element is provided as a wedged extension at on of the blades of the lopper head, the wedge could be inclined by 35°. Note that the geometry and dimensions of the guidance elements may be selected and adapted according to respective needs, i. e. dimensions of the lopper head, in particular cutting blades, required mechanical strength and others.

Selected embodiments of the invention will now be described in connection with the annexed figures, in which:
- Fig. 1: shows a side view of a lopper device in a first configuration;
- Fig. 2: shows a first side view of the lopper device in a second configuration;
- Fig. 3: shows a second side view of the lopper device in the second configuration; and
- Fig. 4: shows a top view of the lopper device in the second configuration.

Note that elements having same or similar functions are designated with the same reference signs in different figures.

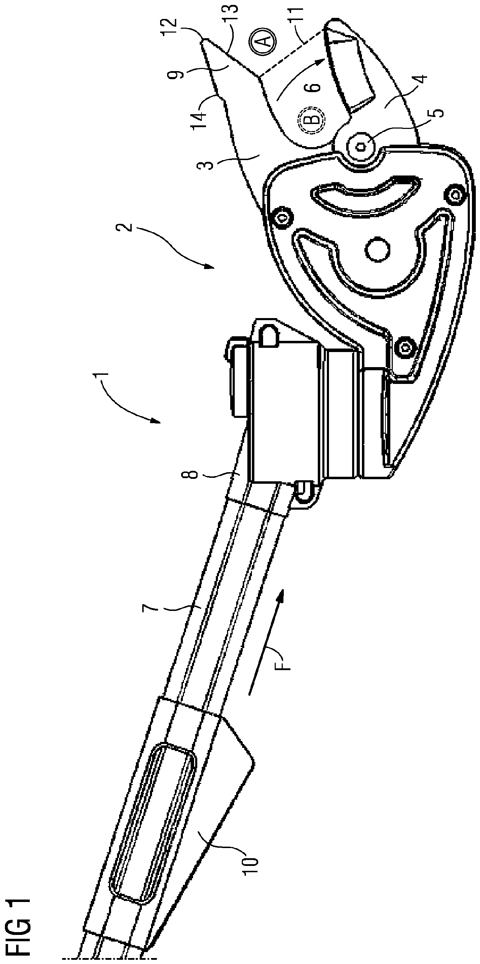

Fig. 1 shows a side view of a lopper device 1 in a first configuration. The lopper device comprises a lopper head 2 having two scissor-type cutting blades of which a first one is a fixed blade 3 and a second one is a moving blade 4. The fixed blade 3 is fixedly attached to the lopper head 2, whereas the moving blade 4 is rotatably attached to the cutting head 2. In more detail, the cutting blades are rotatable against each other about a hinge pin 5 rotatably keeping together the cutting blades.

In particular in the opened state of the cutting blades, i. e. in the fully opened state, a cutting gap 6, or cutting throat, is defined between the fixed cutting blade 3 and the moving cutting blade 4. The cutting gap 6 is adapted to accommodate branches and the like, i. e. items to be lopped. Once the item to be lopped is positioned within the cutting gap 6, the moving blade 4 can be operated.

Operation of the moving blade 4 may for example be accomplished via a cord-and-wheel mechanism in which a pulling action on a cord is translated into a rotating movement of the moving blade 4. The moving blade 4 rotates upon actuation around the hinge pin 5 as indicated by the bent arrow shown in Fig. 1. Rotating the moving blade 4 in a lopping action will result in closing the cutting gap 6 such that the item positioned in the cutting gap 5 is lopped. A respective cutting is parallel to a cutting plane defined by the cutting blades.

The lopper device 1 further comprises a stick 7 or handle to which the lopper head 2 is attached to. For coupling the lopper head 2 to the lopper stick 7, the lopper head 2 may comprise a connector section 8 adapted to receive an end section of the lopper stick 7.

Further, the lopper device 1 comprises two guidance elements, in more detail a first guidance element 9 at the fixed blade 4 and a second guidance element 10 at the lopper stick 7. In the following, the guidance elements 9 and 10 will be described in more detail.

The first guidance element 9 is implemented as an extension of the fixed blade 4. In the present case, the first guidance element 9 is implemented in a one piece monolithic configuration with the fixed blade 4. The first guidance element 9 protrudes from the fixed blade 4 such that it clearly projects beyond an entrance plane 11 of the cutting gap 6 schematically indicated by a broken line.

The first guidance element 9 has a wedged shape when regarded in planes parallel to the cutting plane as defined by the cutting blades. In more detail, the first guidance element 9 has a tip end 12 oriented away from the fixed blade 4 and the cutting gap 6. The tip end 12 is pointed, but rounded at the outermost edge. In particular in a direction from the tip end 12 towards the fixed blade 4, the first guidance element 9 has a wedged geometry. The wedged geometry is such that a guiding edge 13 is slanted and oriented towards the cutting gap 6 and, starting from the tip end 12, increases in height to finally pass over to a cutting edge of the fixed blade 4. In particular, the first guidance element 9 is wedge shaped and increases in height, i. e. in wedge height, in a direction towards the cutting gap.

On a side opposite to the guiding edge 13, the first guidance element 9 has a comparatively even abutment face 14 with a well defined orientation, which will be discussed further below.

The first guidance element 9 can be used as a hook for placing and setting the lopper head 2 on branches intended to be lopped. This situation is shown in Fig. 1 by schematic branch A. In this situation, the user of the lopper device 1 may apply a pushing action or force F to the lopper stick 7. In doing so, the first guidance element 9, in more detail the guiding edge 13 will slide along branch A such that it is fed at least to the entrance plane 11 of the cutting gap 6 and in the end into the gutting gap 6, which is shown by dotted branch B in Fig. 1. Actuating the moving blade 4 will lop branch B positioned in the cutting gap 6.

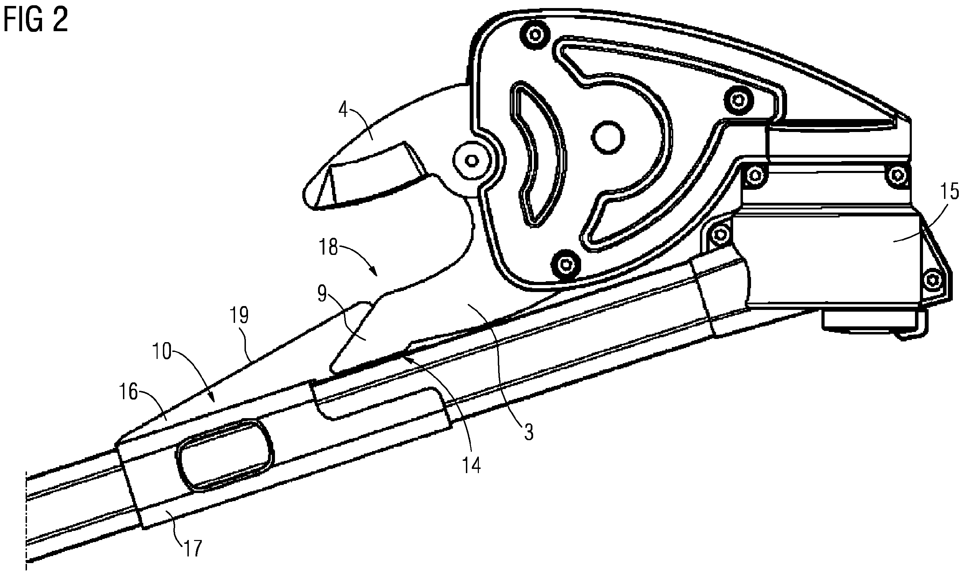

As already mentioned, the lopper device 1 further comprises a second guidance element 10 which is attached to the lopper stick 7. The second guidance element 10 already shown in Fig. 1, will be described in more detail in particular with reference to Fig. 2 to 4.

Fig. 2 shows fist side view of the lopper device 1 in a second configuration. The second configuration differs from the first configuration in that the lopper head 2 has a different orientation. In order to explain the different orientation it has to be mentioned that the lopper head 2 comprises a cranked pivot bearing 15 pivotably carrying the cutting blades.

As can be seen in particular from Fig. 2, the pivot bearing 15 and cutting blades, in particular the cutting gap 6 are implemented such that the cutting blades and cutting gap 6 can be oriented antiparallel to the lopper stick 7. In the configuration shown in Fig. 1, where the cutting gap 6 and cutting blades are oriented away from the lopper stick 7, the cutting blades are oriented parallel to the lopper stick 7.

The pivot bearing 15, cutting blades and cutting gap 6 are designed and adapted such that in the antiparallel configuration, as depicted in particular in Fig. 2 a back face, i. e. the linear abutment face 14 of the first guidance element 9 faces the lopper stick 7. In this way it can prevented that branches enter and get stuck between the fixed blade 3 and the lopper stick 7.

This is of particular advantage if the second guidance element 10 as depicted in the Figures is not present. If the second guidance element 10 is not present, a comparative large gap between the back side or abutment face 14 of the fixed blade 3 and the lopper stick 7 would be prone to jamming branches or twigs. The abutment face 14 therefore is oriented and adapted such that the gap between the first guidance element 9 and the lopper stick 7 can be kept as low as possible to allow pivoting movement of the cutting blades but prevent branches ant the like from entering the gap.

In the present case, the arrangement and design of the pivot bearing 15, cutting blades and cutting gap 6 is such that the cutting blades, in particular the fixed blade 3, generally can be rotated in a full circle revolution without a cutting blade, in particular the fixed blade 3 positioned between moving blade 4 and lopper stick 7 in the second configuration, strikes the lopper stick 7.

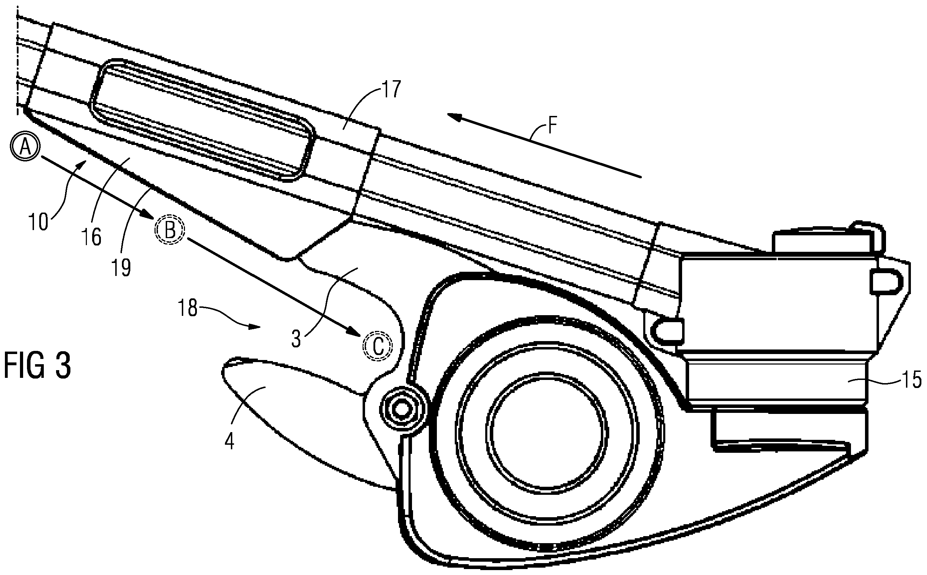

However, this general possibility is restricted by the second guidance element 10 which is attached to the lopper stick 7 such that the fixed blade 3, but at least the fist guidance element 9, abuts against and overlaps the second guidance element 10 in the antiparallel configuration. This is readily visible from Fig. 2 and also from Fig. 3 showing a second side view of the lopper device 1 in the second configuration.

The second guidance element 10 therefore acts as a kind of pivotal stop alleviating ease of use of the lopper device 1, in particular operating and positioning the lopper head 2. The second guidance element 10 however has a second function which will be described below.

The second guidance element 10 comprises a wedged fin 16 which is attached to the lopper stick 7 via a sleeve 17.

The sleeve 17 is implemented and shaped such that it can be put, in particular pushed, over the lopper stick 7. An inner diameter or cross section of the sleeve 17 corresponds to an outer diameter of the lopper stick 7. The geometries, in particular diameters, are preferably selected such that the second guidance element 10 can be fixedly positioned on the lopper stick 7. If needed, the second guidance element 10 can be additionally fixed by fixing elements such as screws, bolts, rivets and/or by adhesive.

The wedged fin 16 as shown in Fig. 2 and Fig. 3 in the antiparallel configuration of the lopper head 2 makes up a kind of ramp. The ramp starts from at a point distant from the fixed blade 3 at the lopper stick and leads to an entrance point or area 18 of the cutting gap 6. Here, a further guiding edge 19 of the wedged fin 16 is slanted vis-à-vis the lopper stick 7 and towards the cutting gap 6.

In particular, the wedged height of the wedged fin 16 increases towards the cutting blades and cutting gap 6. As can in particular be seen from Fig. 2, an upper shoulder of the wedged fin, i. e. a wedged shoulder, lies close and nearby an upper shoulder of the first guidance element. Note that the wedged shoulder is located approximately in the entrance area to the cutting gap 6.

The second guidance element 10 in particular is adapted to guide items to be lopped into and towards the cutting gap 6. In Fig. 3, three different situations (A to C) of guiding a branch or twig into the cutting gap 6 are depicted.

In a fist stage, indicated by branch A, the lopper stick 7 is placed on a branch intended to be lopped.

By pulling the lopper stick 7 as indicated by arrow F in Fig. 3, the branch will contact and interact in a second stage with the wedged fin 16 and will be guided along the further guiding edge 19 of the wedged fin 16, which is indicated by branch B.

By further pulling the lopper stick 7, the branch will in a third and final stage be positioned within the cutting gap 6 such that it can be lopped by adequate operation of the moving blade 4. The situation in which the branch is positioned within the cutting gap 6 is indicated in Fig. 3 by branch C.

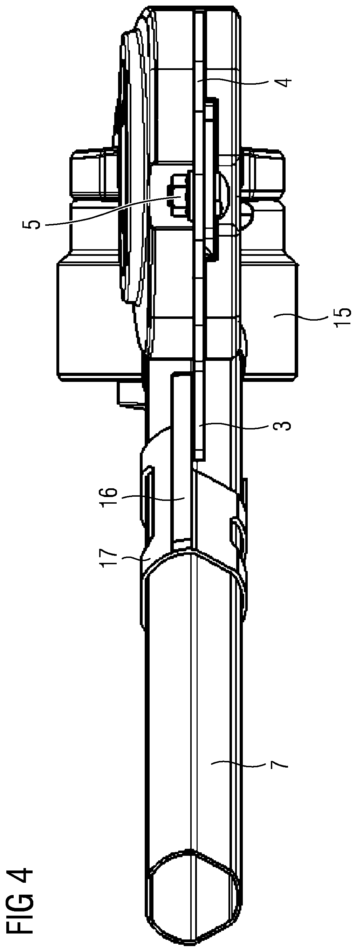

As becomes obvious in particular from Fig. 3 and Fig. 4 a wedge height of the wedged fin 16 essentially corresponds to a wedge height of the first guidance element 9, in particular such that gaps, ridges and/or edges in a transitional area between the wedged fin 16 and the fixed blade 3 and/or first guidance element 9 are avoided, at least kept as small as possible. Here the branch to be lopped can be transferred in a relatively smooth motion from the lopper stick 7 into the cutting gap.

Note that the length of the wedged fin 16 and the length of the first guidance element 9 differ from each other. In detail, the length of the first guidance element 9 is shorter than the length of the wedged fin 16. It shall however be noted, that the length of the wedged fin 16 and first guidance element 9, in general geometric parameters thereof, can be selected according to respective needs. In particular, the length of the wedged fin 16 and the first guidance element 9 and an inclination of the guiding edge 13 and the further guiding edge 19 can be freely adapted to best cope with the dimensions of the lopper head 2 and cutting blades.

It shall be summarized that the second guidance element 10, i. e. the wedged fin 16, is useful for bridging steps, shoulders and/or comparatively abrupt transitions between lopper stick 7 and cutting gap 6 and/or cutting blades.

Fig. 4 shows a top view of the lopper device 1 in the second configuration. In particular, from Fig. 4 it can be seen that the fixed blade 3 in the antiparallel configuration laterally abuts against the wedged fin 16. Further, it can be seen that a center plane of the wedged fin 16 is parallel to an axial plane of symmetry of the lopper device, in particular lopper head, and a cutting plane defined by the cutting blades.

From a combination of Fig. 1 to 4 it can be seen that the sleeve 17 is adapted to fully engage around the lopper stick 7. It shall be noted, that the sleeve 17 may be adapted to be snap connected to the lopper stick 7, in which case the sleeve 17 may be implemented as a C- or U-shaped snap element.

From Fig. 4 it can also be seen that the diameter of the lopper stick 7 in the present case has a rounded polygonal cross section, which may be advantageous for preventing or impeding unintentional twists of the second guidance element 10 and lopper head 2 relative to the lopper stick 7. It shall however be noted, that any other cross sections, such as round, oval, rectangular and the like may be used for the lopper stick 7.

For the sake of completeness it shall be mentioned that the pivot bearing 15 may comprise a first bearing element attached to or implemented in a one-piece part configuration with the connector section 8, and a second bearing element pivotably attached to the first bearing element and to which the cutting blades are attached to.

In all, it can be seen, that the lopper device proposed herein allows easy and alleviated remote operation and easy mechanical handling.

### Reference signs:

- 1: lopper device
- 2: lopper head
- 3: fixed blade
- 4: moving blade
- 5: hinge pin
- 6: cutting gap
- 7: lopper stick
- 8: connector section
- 9: first guidance element
- 10: second guidance element
- 11: entrance plane
- 12: tip end
- 13: guiding edge
- 14: abutment face
- 15: pivot bearing
- 16: wedged fin
- 17: sleeve
- 18: entrance area
- 19: further guiding edge

## Claims

1. Lopper device (1) comprising a lopper stick (7) adapted to be mounted to and carrying a lopper head (2) having two cutting blades (3, 4) rotatable relative to each other and in the opened state defining a cutting gap (6) therebetween, and further comprising at least one guidance unit (9, 10) adapted to guide items (A, B, C) to be lopped into and towards the cutting gap (6), wherein the guidance unit (9, 10) comprises at least one wedged guidance element (9, 10) increasing in height in a direction towards the cutting gap (6), **characterized in that**
in at least one positional configuration of the lopper head (2), the cutting blades, in particular a fixed blade, are/is positioned at the lopper stick (7), with the cutting gap (6) being oriented or opens in a direction towards an end of the lopper stick (7) remote from the end to which the lopper head (2) is mounted,
with the guidance element (9, 10) being implemented as
- a wedged extension (9) axially protruding from at least one of the cutting blades (3, 4) with the back face or the abutment face of the wedged extension (9) facing or abutting the lopper stick (7),
and/or
- a wedged fin (16), blade or lamellae attached to the lopper stick (7) with the wedged fin guidance element (10) comprising a sleeve (17) adapted and designed to be fixed, engage around and/or wrap around the lopper stick (7).

2. Lopper device (1) according to claim 1, wherein the at least one guidance element (9, 10) maybe oriented parallel or share a common plane with the cutting plane, with the cutting plane being the plane in which the cutting edges of the cutting blades (3, 4) lies.

3. Lopper device (1) according to claim 1, wherein the at least one wedged extension guidance element (9) is implemented in a one piece monolithic configuration with the respective cutting blade (3).

4. Lopper device (1) according to at least one of claims 1 and 3, comprising a fixed blade (3) and a moving blade (4), wherein the wedged extension guidance element (9) is part of the fixed blade (3).

5. Lopper device (1) according to at least one of claims 1 to 4, wherein a wedge height of the wedged fin (16) essentially corresponds to a wedge height of the wedged extension (9).

6. Lopper device (1) according to claim 1, wherein the lopper head (2) comprises a cranked pivot bearing (15) pivotably carrying the cutting blades (3, 4), wherein the pivot bearing (15) and cutting blades (3, 4) are implemented such that the cutting blades (3, 4) can be oriented parallel and at least essentially antiparallel to a lopper stick (7) carrying the lopper head (2), wherein in the antiparallel configuration a back face (14) of the wedged extension guidance element (9) preferably faces the lopper stick (7).

7. Lopper device (1) according to claim 6, wherein the pivot bearing (15) and arrangement of cutting blades (3, 4) is such that the cutting blades (3, 4) generally can be rotated in a full circle revolution without a cutting blade (3, 4) striking the lopper stick (7).

8. Lopper device (1) according to at least one of claims 6 and 7, wherein in the antiparallel configuration, one of the blades, preferably the fixed blade (3), in particular the wedged extension guidance element (9) and/or back face (14) thereof, laterally abuts against and overlaps the wedged fin guidance element (10, 16) attached to the lopper stick (7).

## Patentansprüche

1. Schneidegerät (1) umfassend einen Schneidestab, der dazu geeignet ist, an einem Schneidekopf (2) mit zwei relativ zueinander drehbaren Schneidklingen (3, 4), die im geöffneten Zustand einen Schneidspalt (6) zwischen sich bilden, befestigt zu werden und diesen tragend, weiterhin umfassend mindestens eine Führungseinheit (9, 10), die dazu geeignet ist, zu schneidende Gegenstände (A, B, C) in den und zu dem Schneidspalt (6) zu führen, wobei die Führungseinheit (9, 10) mindestens ein in Richtung zum Schneidspalt (6) hin in der Höhe zunehmendes Keilführungselement (9, 10) aufweist,
**dadurch gekennzeichnet, dass**
in mindestens einer Positionskonfiguration des Schneidekopfes (2) die Schneidklingen, insbesondere eine fixierte Klinge, am Schneidestab (7) positioniert ist/sind, wobei der Schneidspalt (6) in Richtung des einen Endes des Schneidestabs (7), das von dem Ende, an dem der Schneidkopf (2) befestigt ist, entfernt ist, orientiert ist oder sich nach dorthin öffnet,
wobei das Führungselement (9,10) ausgeführt ist als
- als keilförmige Verlängerung (9), die axial von mindestens einer der Schneidklingen (3) hervorsteht, wobei die Rückfläche oder die Anlagefläche der keilförmigen Verlängerung (9) dem Schneidestab (7) gegenüber liegt oder an ihm anliegt,
und/oder
- als Keilrippe (16), die Klinge oder Lamellen mit dem Keilrippen-Führungselement (10) am Schneidestab (7) befestigt, umfassend eine Hülse (17), die dafür geeignet und ausgebildet ist, an dem Schneidestab (7) befestigt und/oder um ihn herumgewickelt zu sein.

2. Schneidegerät (1) gemäß Anspruch 1, wobei das mindestens eine Führungselement parallel ausgerichtet sein kann oder eine gemeinsame Ebene mit der Schnittebene teilt, wobei die Schnittebene die Ebene ist, in der die Schnittkanten der die Schneidklingen (3, 4) liegen.

3. Schneidegerät (1) nach Anspruch 3, wobei das mindestens eine keilförmige Verlängerungsführungselement (9) einstückig monolithisch mit der jeweiligen Schneidklinge (3) ausgebildet ist.

4. Schneidegerät (1) gemäß mindestens einem der Ansprüche 1 bis 3, umfassend eine festen Klinge (3) und eine bewegliche Klinge (4), wobei das keilförmige Verlängerungsführungselement (9) Teil der festen Klinge (3) ist.

5. Schneidegerät (1) gemäß mindestens einem der Ansprüche 1 bis 4, wobei eine Keilhöhe der Keilrippe (16) im Wesentlichen einer Keilhöhe der keilförmigen Verlängerung (9) entspricht.

6. Schneidegerät (1) gemäß Anspruch 1, wobei der Schneidekopf (2) ein die Schneidklingen (3, 4) schwenkbar tragendes Schwenklager (15) umfasst, wobei das Schwenklager (15) und Schneidklingen (3, 4) derart ausgebildet sind, dass die Schneidklingen (3, 4) parallel und zumindest im Wesentlichen antiparallel zu einem den Schneidekopf (2) tragenden Schneidestab (7) ausgerichtet sein können, wobei in der antiparallelen Konfiguration eine Rückfläche (14) des keilförmigen Verlängerungsführungselements (9) vorzugsweise dem Schneidestab (7) zugewandt ist.

7. Schneidegerät (1) gemäß Anspruch 6, wobei das Schwenklager (15) und die Anordnung der Schneidklingen (3, 4) derart ist, dass die Schneidklingen (3, 4) im Allgemeinen in einer volle Kreisdrehung rotiert werden können, ohne dass eine Schneidklinge (3, 4) den Schneidestab (7) trifft.

8. Schneidegerät (1) gemäß mindestens einem der Ansprüche 6 und 7, wobei in der antiparallelen Konfiguration eine der Klingen, vorzugsweise die feste Klinge (3), insbesondere das keilförmige Verlängerungsführungselement (9) und/oder die Rückfläche (14) desselben, seitlich an dem an dem Schneidestab (7) befestigten Keilrippenführungselement (10, 16) anliegt und dieses überlappt.

## Revendications

1. Dispositif de coupe (1) comprenant une barre de coupe (7) adapté à être montée à et portant une tête de coupe (2) ayant deux lames de coupe (3, 4) capable d'être tourné l'une contre l'autre et formant dans l'état ouvert une fente de coupe (6) entre elles, et comprenant en outre au moins une unité de guidage (9, 10) adapté à guider des articles à être coupé (A, B, C) dans et vers la fente de coupe (6), dans lequel l'unité de guidage (9, 10) comprend au moins un élément de guidage en forme de coin (9, 10) augmentant en hauteur en direction vers la fente de coupe (6),
**caractérisé en ce que**
dans au moins une configuration de position de la tête de coupe (2), les lames de coupe, en particulier une lame fixe, est/sont positionnées à la barre de coupe (7), la fente de coupe (6) étant orientée ou ouvrante dans la direction d'une extrémité de la barre de coupe (7) écartée de l'extrémité sur laquelle la tête de coupe (2) est montée,
dans lequel l'élément de guidage (9,10) est réalisé sous forme
- d'une extension en forme de coin (9) faisant saillie axialement à partir d'au moins une des lames de coupe (3), dans lequel la surface arrière ou la surface de contact de l'extension en forme de coin (9) fait face à la barre de coupe (7) ou jouxte contre elle,
et/ou
- d'ailette calée (16),
la lame ou les lamelles fixées à la barre de coupe (7) avec l'élément guidage en forme de d'ailette de coin (10) comprenant un manchon (17) adapté et configuré à être fixé à, retenant et/ou à être enroulé autour la barre de coupe (7).

2. Dispositif de coupe (1) selon la revendication 1, dans lequel l'au moins un élément de guidage est orienté parallèlement ou partage un plan commun avec le plan de coupe, le plan de coupe étant le plan dans lequel les bords de coupe des lames de coupe (3, 4) se trouvent.

3. Dispositif de coupe (1) selon la revendication 3, **caractérisé en ce que** l'au moins l'élément de guidage à extension en forme de coin (9) est réalisé en une seule pièce monolithique avec la lames de coupe respective (3).

4. Dispositif de coupe (1) selon au moins l'une des revendications 1 à 3, comprenant une lame fixe (3) et une lame mobile (4), dans lequel l'élément de guidage à extension en forme de coin (9) est conforme à la partie de la lame fixe (3).

5. Dispositif de coupe (1) selon au moins une des revendications 1 à 4, dans lequel une hauteur de l'ailette calée(16) correspond essentiellement à une hauteur du coin de l'extension en forme de coin (9).

6. Dispositif de coupe (1) selon la revendication 1, dans lequel la tête d'coupe (2) comprend un palier de pivotement (15) supportant de manière pivotante les lames de coupe (3, 4), dans lequel le palier de pivotement (15) et des lames de coupe (3, 4) sont formées de telle sorte que les lames de coupe (3, 4) peuvent être alignés parallèles et au moins essentiellement antiparallèle à la barre de coupe (7) portant la tête de coupe (2), dans lequel dans la configuration antiparallèle, une surface arrière (14) de l'élément de guidage à extension en forme de coin (9) préférablement fait face à la barre de coupe (7).

7. Dispositif de coupe (1) selon la revendication 6, dans lequel le palier de pivotement (15) et l'arrangement des lames de coupe (3, 4) est telle que les lames de coupe (3, 4) peuvent généralement être tournées en un cercle complet sans qu'un lame de coupe (3, 4) frappe la barre de coupe (7).

8. Dispositif de coupe (1) selon au moins l'une des revendications 6 et 7, dans lequel, dans la configuration antiparallèle, l'une des lames, de préférence la lame fixe (3), en particulier l'élément de guidage d'extension en forme de coin (9) et/ou la surface arrière (14) de celui-ci, jouxte latéralement contre l'ailette calée de l'élément de guidage (10, 16) attachée à la barre de coupe (7) et recouvre celle-ci.
